# EUROPÄISCHE PATENTSCHRIFT

(11) **EP 3 504 456 B1**
(45) Veröffentlichungstag und Bekanntmachung des Hinweises auf die Patenterteilung: **19.01.2022**
(21) Anmeldenummer: 17751645.7
(22) Anmeldetag: 19.07.2017
(51) Int. Cl.: F16D 55/228, F16D 65/097

(54) **FESTSATTELSCHEIBENBREMSE MIT EINEM FÜHRUNGSELEMENT ZUR RÜCKSTELLUNG EINER BREMSBELAGANORDNUNG**
FIXED-CALIPER DISK BRAKE HAVING A GUIDE ELEMENT FOR THE RESETTING OF A BRAKE PAD ARRANGEMENT
FREIN À DISQUE À ÉTRIER FIXE COMPRENANT UN ÉLÉMENT DE GUIDAGE SERVANT AU RAPPEL D'UN ENSEMBLE GARNITURE DE FREIN

(30) Priorität: 24.08.2016 DE 102016010301
(43) Veröffentlichungstag der Anmeldung: 03.07.2019
(73) Patentinhaber: ZF Active Safety GmbH, 56070 Koblenz (DE)
(72) Erfinder: BECKER, Marco, 56651 Oberduerenbach (DE); ROESSINGER, Florian, 56564 Neuwied (DE)
(74) Vertreter: ZF Friedrichshafen AG
(86) Internationale Anmeldenummer: PCT/EP2017/068230
(87) Internationale Veröffentlichungsnummer: WO 2018/036724

(56) Entgegenhaltungen:
- DE-A1-102014 014 081
- US-A1- 2013 180 810
- US-A1- 2016 076 611
- US-A1- 2016 102 721

## Beschreibung

### Hintergrund der Erfindung

Hier wird eine Festsattelscheibenbremse für ein Kraftfahrzeug beschrieben, die einen fahrzeugfesten Bremssattel, wenigstens eine Bremsbelaganordnung sowie wenigstens ein Führungsmittel umfasst. Des Weiteren werden ein Bremssattel, ein Reparaturkit und ein Führungsmittel für eine Festsattelscheibenbremse beschrieben.

### Stand der Technik

Herkömmliche Festsattelscheibenbremsen sind vielfach aus dem Stand der Technik bekannt und umfassen Bremsbelaganordnungen mit Bremsbelägen. Die Bremsbeläge sind durch eine bremswirksame Verlagerung der Bremsbelaganordnungen mit einer Bremsscheibe der Festsattelscheibenbremse zum Erzielen einer Bremswirkung in Wechselwirkung bringbar. Hierzu sind die Bremsbelaganordnungen in einer Führung eines Bremssattels der Festsattelscheibenbremse verlagerbar geführt.

Um bei einem Bremsvorgang auftretende Vibrationen und Geräuschbildungen zu reduzieren und gleichzeitig auftretende Kräfte bestmöglich von den Bremsbelaganordnungen an einen Bremssattel der Festsattelscheibenbremse zu übertragen, schlagen die Dokumente WO 2005/064193 A1 und WO 2005/064194 A1 jeweils eine Festsattelscheibenbremse mit federnden Führungsmitteln vor. Diese Führungsmittel sind jeweils zwischen einer Bremsbelaganordnung und dem Bremssattel der Festsattelscheibenbremse angeordnet und stützen so die zugehörige Bremsbelaganordnung gegenüber dem Bremssattel ab.

Trotz solcher Führungsmittel kommt es bei bekannten Festsattelscheibenbremsen zu ungewünschter Geräuschbildung, die von Insassen des Fahrzeugs als störend empfunden werden können. Insbesondere treten ungewünschte Geräuschbildungen dadurch auf, dass trotz eines Lösens einer Bremskraft am Ende eines Bremsvorgangs häufig weiter ein Kontakt zwischen den Bremsbelägen und der Bremsscheibe besteht, da die Bremsbelaganordnungen nicht vollständig in eine Ausgangsposition zurück verlagert werden. Hierdurch entstehen Restschleifmomente, die sich zusätzlich zu der störenden Geräuschbildung auch negativ auf den Kraftstoffverbrauch des Kraftfahrzeugs auswirken, da auch bei einer ungebremsten Fahrt geringe Bremskräfte durch die Restschlafmomente überwunden werden müssen.

Das Dokument WO 01/79723 A1 offenbart ein Federelement für eine Festsattelscheibenbremse, das zwischen zwei einander gegenüberliegenden BremsbelaganordnungenE angeordnet ist, um diese auseinander und somit von einer dazwischenliegenden Bremsscheibe weg zu drücken.

Das Dokument DE202015104454U offenbart eine Scheibenbremse mit einer Rückzugsfeder, die das Zurückziehen eines Bremsbelags unterstützt.

### Zugrundeliegendes Problem

Trotz bekannter Lösungen besteht weiter ein Bedarf an einer Verbesserung von Festsattelscheibenbremsen zur Vermeidung der oben beschriebenen Nachteile.

Es ist daher die Aufgabe, eine verbesserte Festsattelscheibenbremse sowie zugehörige Komponenten bereitzustellen, die ein Auftreten von Geräuschbildungen während einer Fahrt eines zugehörigen Kraftfahrzeugs sowie den Kraftstoffverbrauch des Kraftfahrzeugs verringern.

### Vorgeschlagene Lösung

Diese Aufgabe wird gelöst durch eine Festsattelscheibenbremse mit den Merkmalen des Anspruchs 1, und einen Bremssattel mit den Merkmalen des Anspruchs 8.

Bevorzugte Ausführungsformen werden aus den Unteransprüchen 2 bis 7 und 9 sowie der nachstehenden Beschreibung ersichtlich.

Eine Festsattelscheibenbremse für ein Kraftfahrzeug umfasst einen fahrzeugfesten Bremssattel mit wenigstens einer Führung, die einen Aufnahmebereich aufweist, und wenigstens eine Bremsbelaganordnung mit einem Bremsbelagträger, an dem ein Bremsbelag angebracht ist, wobei der Bremsbelagträger wenigstens eine Führungsfläche umfasst. Zudem umfasst die Festsattelscheibenbremse wenigstens ein Führungsmittel mit einem Führungsabschnitt, der in dem Aufnahmebereich der wenigstens einen Führung angebracht ist, wobei die wenigstens eine Bremsbelaganordnung über die wenigstens eine Führungsfläche des Bremsbelagträgers, die an dem wenigstens einen Führungsmittel, vorzugsweise an wenigstens einer Anlagefläche des Führungsmittels, verlagerbar anliegt, im Bereich der Führung des Bremssattels verlagerbar geführt ist. Durch eine bremswirksame Verlagerung der wenigstens einen Bremsbelaganordnung ist der Bremsbelag mit einer Bremsscheibe zum Erzielen einer Bremswirkung in Wechselwirkung bringbar. Das Führungsmittel umfasst ein elastisch deformierbares Rückstellelement, das sich gegenüber dem Bremsbelagträger abstützt und dazu ausgebildet ist, durch die bremswirksame Verlagerung der wenigstens einen Bremsbelaganordnung eine Rückstellkraft infolge einer elastischen Deformation auf diese auszuüben, die der bremswirksamen Verlagerung der wenigstens einen Bremsbelaganordnung entgegenwirkt. Das Rückstellelement ist zumindest teilweise in einer Ausnehmung des fahrzeugfesten Bremssattels angeordnet.

Durch die der bremswirksamen Verlagerung der wenigstens einen Bremsbelaganordnung entgegenwirkende Rückstellkraft, die das elastisch deformierbare Rückstellelement des Führungsmittels auf die wenigstens eine Bremsbelaganordnung ausübt, erfolgt eine Rückstellung der wenigstens einen Bremsbelaganordnung bei einem Lösen der aufgebrachten Bremskraft. Durch diese Rückstellung kann ein Lüftspiel von beispielsweise 0,2 mm zwischen einer Reibfläche des zugehörigen Bremsbelags der wenigstens einen Bremsbelaganordnung und der Bremsscheibe in einer Nichtbetätigungsstellung der wenigstens einen Bremsbelaganordnung erreicht werden. Mit anderen Worten verhindert das Rückstellelement des wenigstens einen Führungsmittels einen dauerhaften Kontakt eines Bremsbelag wenigstens einer Bremsbelaganordnung und einer Bremsscheibe während einer ungebremsten Fahrt des Kraftfahrzeugs, sodass keine Restschleifmomente auftreten. Dies reduziert den Kraftstoffverbrauch des Kraftfahrzeugs.

Des Weiteren ist das wenigstens eine Führungsmittel federnd ausgebildet und wirkt geräuschreduzierend, indem es im Falle einer Betätigung der Festsattelscheibenbremse eine Übertragung von Reibschwingungen an den fahrzeugfesten Bremssattel behindert.

Ferner dient das wenigstens eine Führungsmittel dazu, während eines Bremsvorgangs quer zu der Verlagerungsrichtung der wenigstens einen Bremsbelaganordnung auftretende Abstützkräfte von der wenigstens einen Bremsbelaganordnung an den fahrzeugfesten Bremssattel zu übertragen.

Die in dem Bremssattel ausgebildete Ausnehmung bietet im Gegensatz zu herkömmlichen Festsattelscheibenbremsen ausreichend Platz, um ein Rückstellelement im Bereich einer Führung eines fahrzeugfesten Bremssattels anzuordnen, wodurch ein effektives Einwirken des Rückstellelements auf die zugehörige Bremsbelaganordnung ermöglicht wird. Durch die zumindest teilweise Anordnung des Rückstellelements des wenigstens einen Führungsmittels in der Ausnehmung des fahrzeugfesten Bremssattels ist dieses elastisch deformierbare Rückstellelement von äußeren Einflüssen geschützt, was die Betriebsdauer der Festsattelscheibenbremse erhöhen kann. Zudem ermöglicht die zumindest teilweise Anordnung des elastisch deformierbaren Rückstellelements in der Ausnehmung des fahrzeugfesten Bremssattels einen einfachen Zusammenbau der Festsattelscheibenbremse.

Es versteht sich, dass die Festsattelscheibenbremse insbesondere zwei Bremsbelaganordnungen mit jeweils einem Bremsbelagträger und einem daran angebrachten Bremsbelag umfassen kann, wobei jeder der Bremsbelagträger zwei seitliche Führungsflächen aufweist. Somit umfasst die Festsattelscheibenbremse insbesondere vier Führungsmittel mit einem Führungsabschnitt, wobei an jedem Führungsmittel jeweils eine Führungsfläche der Bremsbelagträger verlagerbar anliegt, wobei jedes der vier Führungsmittel in einer von vier Aufnahmebereichen des fahrzeugfesten Bremssattels angebracht ist. Genauer gesagt kann die Führungsfläche jedes Bremsbelagträgers beispielsweise an wenigstens einer Anlagefläche eines zugehörigen Führungsmittels anliegen und gleitend an dieser verlagerbar sein oder geringfügig von der wenigstens einen Anlagefläche beabstandet sein.

Die Bremsbelaganordnungen der Festsattelscheibenbremse können beispielsweise jeweils mittels eines oder mehrerer hydraulisch oder elektromechanisch betriebener Kolben, die in dem Bremssattel verlagerbar angeordnet sind, bremswirksam verlagert werden. Der weitere, hier nicht beschriebene Aufbau und die weitere, hier nicht beschriebene Funktionsweise von Festsattelscheibenbremsen sind aus dem Stand der Technik hinreichend bekannt.

In einer weiteren Ausführungsform kann das Rückstellelement des wenigstens einen Führungsmittels der Festsattelscheibenbremse einen elastisch deformierbaren Federbügel mit einem bogenförmig ausgebildeten Verbindungsabschnitt aufweisen. Dieser bogenförmig ausgebildete Verbindungsabschnitt kann seitlich an dem Führungsabschnitt des Führungsmittels angebracht sein, insbesondere an einer außenliegenden, von der Bremsscheibe weg weisenden Seite des Führungsmittels. Der Federbügel erstreckt sich in dieser Ausführungsform über den Führungsabschnitt hinweg im Wesentlichen in der Verlagerungsrichtung der wenigstens einen Bremsbelaganordnung und in Richtung der Bremsscheibe.

Ferner kann der Federbügel des wenigstens einen Führungsmittels der Festsattelscheibenbremse die wenigstens eine Führungsfläche des Bremsbelagträgers mittels eines gegenüber dem Federbügel abgewinkelten Bügelarms umgreifen. Alternativ oder zusätzlich dazu kann der Federbügel auch einen sonstigen Abschnitt der zugehörigen, wenigstens einen Bremsbelaganordnung mittels des Bügelarms um- oder hintergreifen. Der Bügelarm kann eine Kontaktprägung aufweisen, um eine punktförmige oder linienförmige Abstützung des Rückstellelements gegenüber dem Bremsbelagträger auszubilden.

Das Rückstellelement des wenigstens einen Führungsmittels der Festsattelscheibenbremse kann einstückig mit dem Führungsmittel ausgebildet sein. Dies ist vorteilhaft für die Fertigung des wenigstens einen Führungsmittels.

Das wenigstens eine Führungsmittel der Festsattelscheibenbremse kann in einer Weiterbildung wenigstens eine Aussparung zur gezielten Verringerung des Verformungswiderstands des Rückstellelements aufweisen, insbesondere hinsichtlich einer plastische Deformation des Rückstellelements. Diese wenigstens eine Aussparung kann beispielsweise an dem Rückstellelement und/oder an dem Führungsabschnitt des Führungsmittels angeordnet sein. Auch kann diese wenigstens eine Aussparung in einem Übergangsbereich zwischen dem Rückstellelement und dem Führungsabschnitt des Führungmittels angeordnet sein. So kann die wenigstens eine Aussparung beispielsweise derart angeordnet und ausgebildet sein, dass sich bei einer vorbestimmten bremswirksamen Verlagerung der wenigstens einen Bremsbelaganordnung eine definierte plastische Deformation des Rückstellelements ergibt, ohne dabei die Eigenschaften der elastischen Deformierbarkeit des Rückstellelements zu beeinflussen. Auch kann die wenigstens eine Aussparung beispielsweise derart angeordnet und ausgebildet sein, dass sich bei einer vorbestimmten bremswirksamen Verlagerung der wenigstens einen Bremsbelaganordnung eine plastische Deformation des Rückstellelements in einem definierten Bereich ergibt. Die wenigstens eine Aussparung kann nach Maßgabe der Material- und Formeigenschaften des Führungsmittels angeordnet und ausgebildet sein. Die vorbestimmte bremswirksame Verlagerung der wenigstens einen Bremsbelaganordnung kann sich aus einem bestimmten Verschleiß des zugehörigen Bremsbelags ergeben. Hierdurch kann mittels der wenigstens einen Aussparung sichergestellt werden, dass selbst bei einem Überschreiten einer definierten Bremsbelagverschleißgrenze weiterhin eine elastische Deformation des Rückstellelements möglich ist, um weiterhin die Rückstellkraft auf die wenigstens eine Bremsbelaganordnung auszuüben. Mit anderen Worten ermöglicht die wenigstens eine Aussparung des Führungsmittels eine Bremsbelagverschleißkompensation und stellt weiter die Funktion des Rückstellelements sicher. Es versteht sich, dass alternativ oder zusätzlich zu der wenigstens einen Aussparung auch eine Einkerbung, ein Einschnitt oder sonstiges zum Erreichen der vorstehend beschriebenen technischen Effekte an dem Führungsmittel vorgesehen sein kann.

Das wenigstens eine Führungsmittel der Festsattelscheibenbremse kann in einer Weiterbildung wenigstens eine Sicke zur gezielten Erhöhung des Verformungswiderstands des Rückstellelements aufweisen, insbesondere hinsichtlich einer plastische Deformation des Rückstellelements. Diese wenigstens eine Sicke kann beispielsweise an dem Rückstellelement und/oder an dem Führungsabschnitt des Führungsmittels angeordnet sein. Auch kann diese wenigstens eine Sicke in einem Übergangsbereich zwischen dem Rückstellelement und dem Führungsabschnitt des Führungmittels angeordnet sein. So kann die wenigstens eine Sicke beispielsweise derart angeordnet und ausgebildet sein, dass sich bei einer vorbestimmten bremswirksamen Verlagerung der wenigstens einen Bremsbelaganordnung eine definierte plastische Deformation des Rückstellelements ergibt, ohne dabei die Eigenschaften der elastischen Deformierbarkeit des Rückstellelements zu beeinflussen. Auch kann die wenigstens eine Sicke beispielsweise derart angeordnet und ausgebildet sein, dass sich bei einer vorbestimmten bremswirksamen Verlagerung der wenigstens einen Bremsbelaganordnung eine plastische Deformation des Rückstellelements in einem definierten Bereich ergibt. Die wenigstens eine Sicke kann nach Maßgabe der Material- und Formeigenschaften des Führungsmittels angeordnet und ausgebildet sein. Die vorbestimmte bremswirksame Verlagerung der wenigstens einen Bremsbelaganordnung kann sich aus einem bestimmten Verschleiß des zugehörigen Bremsbelags ergeben. Hierdurch kann mittels der wenigstens einen Sicke sichergestellt werden, dass selbst bei einem Überschreiten einer definierten Bremsbelagverschleißgrenze weiterhin eine elastische Deformation des Rückstellelements möglich ist, um weiterhin die Rückstellkraft auf die wenigstens eine Bremsbelaganordnung auszuüben. Mit anderen Worten ermöglicht die wenigstens eine Sicke des Führungsmittels eine Bremsbelagverschleißkompensation und stellt weiter die Funktion des Rückstellelements sicher. Es versteht sich, dass alternativ oder zusätzlich zu der wenigstens einen Sicke auch eine Versteifung, eine Materialverstärkung oder sonstiges zum Erreichen der vorstehend beschriebenen technischen Effekte an dem Führungsmittel vorgesehen sein kann.

In einer Weiterbildung können bei geeigneter Wahl und Ausbildung einer beliebigen Anzahl von Sicken und/oder Aussparungen auch mehrere solcher Verschleißgrenzen definiert werden, sodass im Laufe der Betriebsdauer einer Bremsbelaganordnung und zugehöriger Führungsmittel mehrere definierte plastische Deformationen gezielt hervorgerufen werden können. Damit lässt sich der Verschleiß eines zugehörigen Bremsbelags schrittweise kompensieren.

Gemäß einer weiteren Ausführungsform kann das wenigstens eine Führungsmittel der Festsattelscheibenbremse mehrere elastisch deformierbare Rückstellelemente umfassen. Diese mehreren elastisch deformierbaren Rückstellelement können sich in demselben Bereich oder in unterschiedlichen Bereichen gegenüber der wenigstens einen Bremsbelaganordnung abstützen.

Erfindungsgemäß ist die Ausnehmung des fahrzeugfesten Bremssattels im Bereich des Aufnahmebereichs der wenigstens einen Führung oder daran angrenzend ausgebildet sein. Hierdurch kann eine vergleichsweise einfache Fertigung des fahrzeugfesten, vorzugsweise gegossenen, Bremssattels ermöglicht werden. Zudem ist es hierdurch möglich, das wenigstens eine Führungsmittel mit dem daran angeordneten Rückstellelement auf einfache Weise an dem Bremssattel anzubringen.

Die Ausnehmung des fahrzeugfesten Bremssattels kann eine Hinterschneidung in dem Bremssattel bilden.

Ein weiterer Aspekt betrifft einen Bremssattel für eine Festsattelscheibenbremse der vorstehend beschriebenen Art, der fest mit einer Fahrzeugachse verbindbar oder verbunden ist. Der Bremssattel umfasst wenigstens eine Führung mit einem Aufnahmebereich, der derart dimensioniert und dazu ausgebildet ist, einen Führungsabschnitt eines Führungsmittels aufzunehmen. Eine Führungsfläche eines Bremsbelagträgers einer Bremsbelaganordnung ist mit dem Führungsmittel in Anlage bringbar, sodass die Bremsbelaganordnung über die Führungsfläche des Bremsbelagträgers im Bereich der Führung des Bremssattels verlagerbar geführt ist, um einen Bremsbelag der Bremsbelaganordnung durch eine bremswirksame Verlagerung der Bremsbelaganordnung mit einer Bremsscheibe zum Erzielen einer Bremswirkung in Wechselwirkung zu bringen. Der Bremssattel weist eine Ausnehmung auf, die derart dimensioniert und ausgebildet ist, dass ein elastisch deformierbares Rückstellelement des Führungsmittels zumindest teilweise in der Ausnehmung anordenbar ist. Das elastisch deformierbare Rückstellelement ist gegenüber dem Bremsbelagträger abstützbar und dazu ausgebildet, durch die bremswirksame Verlagerung der Bremsbelaganordnung eine Rückstellkraft infolge einer elastischen Deformation auf diese auszuüben, die der bremswirksamen Verlagerung der Bremsbelaganordnung entgegenwirkt.

Erfindungsgemäß ist die Ausnehmung des fahrzeugfesten Bremssattels im Bereich des Aufnahmebereichs der wenigstens einen Führung oder daran angrenzend ausgebildet sein. Die Ausnehmung des fahrzeugfesten Bremssattels kann eine Hinterschneidung bilden.

### Kurzbeschreibung der Zeichnung

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen, schematischen Zeichnungen. Dabei zeigen alle beschriebenen und/oder bildlich dargestellten Merkmale für sich oder in beliebiger Kombination den hier offenbarten Gegenstand. Die Abmessungen und Proportionen der in den Figuren gezeigten Komponenten sind hierbei nicht unbedingt maßstäblich.
- Figur 1: zeigt eine perspektivische Ansicht einer Festsattelscheibenbremse.
- Figur 2: zeigt eine perspektivische Ansicht der Festsattelscheibenbremse gemäß Figur 1 in einer Schnittdarstellung.
- Figur 3: zeigt einen vergrößerten Ausschnitt der perspektivischen Ansicht aus Figur 2.
- Figur 4: zeigt eine perspektivische Ansicht eines Führungsmittels, das ein Rückstellelement umfasst.
- Figur 5: zeigt eine weitere perspektivische Ansicht des Führungsmittels gemäß Figur 4.
- Figur 6: zeigt einen vergrößerten Ausschnitt der perspektivischen Ansicht aus Figur 4.
- Figur 7: zeigt einen vergrößerten Ausschnitt der weiteren perspektivischen Ansicht aus Figur 5.

### Detaillierte Beschreibung der Zeichnungen

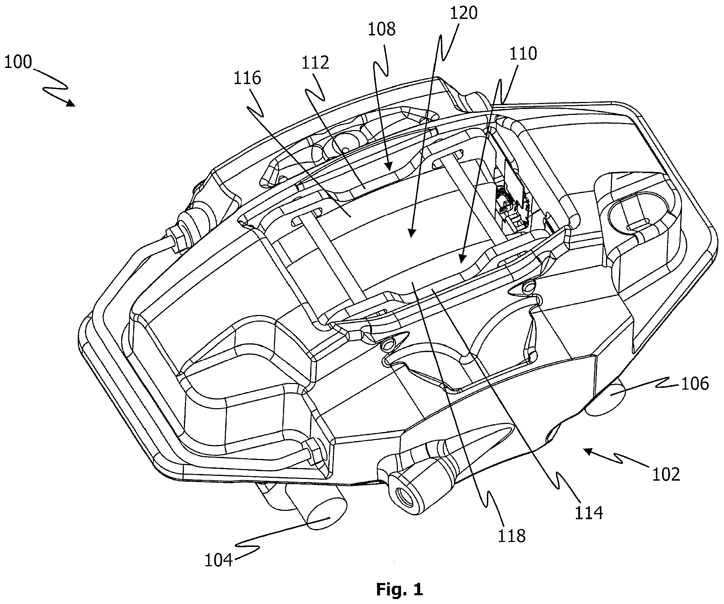

Figur 1 zeigt eine perspektivische Ansicht einer Festsattelscheibenbremse 100, die einen Bremssattel 102 umfasst, der mittels zweier Befestigungseinrichtungen 104 starr mit einer Achse (nicht dargestellt) eines zugehörigen Kraftfahrzeugs verbindbar ist.

Die Festsattelscheibenbremse umfasst ferner zwei Bremsbelaganordnungen 108, 110, die jeweils einen plattenförmigen Bremsbelagträger 112, 114 und einen daran angebrachten Bremsbelag 116, 118 aufweisen. Die Bremsbelaganordnungen 108, 110 sind im Inneren des fahrzeugfesten Bremssattels 102 angeordnet, wobei die Bremsbeläge 116, 118 einander gegenüber liegen und zwischen ihnen einen Aufnahmeraum 120 definieren. In einem am Kraftfahrzeug montierten Zustand ist dieser Aufnahmeraum 120 dafür vorgesehen, einen Abschnitt einer Bremsscheibe (nicht gezeigt) aufzunehmen.

Vergleichbare bzw. gleiche und gleichwirkende Komponenten und Merkmale sind in den weiteren Figuren jeweils mit denselben Bezugszeichen versehen. Teilweise ist in den weiteren Figuren aus Übersichtsgründen auch auf Bezugszeichen einzelner Merkmale und Komponenten verzichtet worden, wobei diese Merkmale und Komponenten in anderen Figuren bereits mit Bezugszeichen versehen sind. Die Komponenten und Merkmale, die in Bezug auf die weiteren Figuren nicht erneut beschrieben sind, ähneln in ihrer Ausbildung und Funktion den entsprechenden Komponenten und Merkmalen gemäß den anderen Figuren.

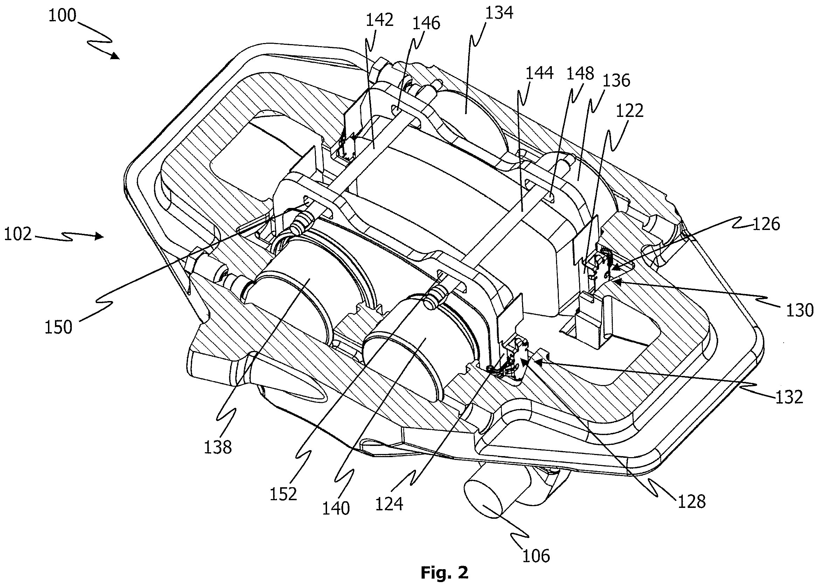

Figur 2 zeigt eine perspektivische Ansicht der in Figur1 gezeigten Festsattelscheibenbremse 100 in einer teilweisen Schnittdarstellung. Genauer gesagt ist der Bremssattel 102 in einer Schnittdarstellung gezeigt, während die in dem Bremssattel 102 angeordneten Komponenten der Festsattelscheibenbremse 100 nicht geschnitten dargestellt sind.

Wie aus Figur 2 zu erkennen ist, sind die beiden Bremsbelaganordnungen 108, 110 jeweils bezüglich einer Rotationsachse der Bremsscheibe (nicht gezeigt) axial verlagerbar in dem Bremssattel 102 geführt. Dazu weisen die Bremsbelagträger 112, 114 jeweils an zwei entgegengesetzten Seiten eine Führungsfläche 122, 124 auf, die jeweils an zwei Flächen (hier nicht gezeigt) an einem Führungsmittel 126, 128 verlagerbar anliegt, das in einem Aufnahmebereich 130, 132 einer Führung des Bremssattels 102 aufgenommen sind. Aus Übersichtsgründen sind in Figur 2 lediglich die beiden Führungsflächen 122, 124, die beiden zugehörigen Führungsmittel 126, 128 sowie die beiden zugehörigen Aufnahmebereiche 130, 132 mit Bezugszeichen versehen.

Für ein bremswirksames Verlagern der beiden Bremsbelaganordnungen 108, 110 aufeinander zu bzw. in Richtung einer nicht gezeigten Bremsscheibe, sind die Bremsbelaganordnungen 108, 110 jeweils mittels zweier hydraulisch betriebener Betätigungskolben 134, 136, 138, 140 bewegbar. Es versteht sich, dass die Festsattelscheibenbremse in einer weiteren Ausführungsform anstelle von hydraulisch betriebenen Betätigungskolben elektromechanisch betriebene Betätigungskolben zum bremswirksamen Verlagern der Bremsbelaganordnungen aufweisen kann. Durch das bremswirksame Verlagern der beiden Bremsbelaganordnungen 108, 110 gelangen die Bremsbeläge 116, 118 in Kontakt mit der Bremsscheibe und erzielt so eine Bremskraft zum Abbremsen des Kraftfahrzeugs.

Um ein bestimmungsgemäßes Verlagern der beiden Bremsbelaganordnungen 108, 110 weiter zu unterstützen und ein Verkippen der Bremsbelaganordnungen zu verhindern, weist die Festsattelscheibenbremse ferner zwei Führungsstäbe 142, 144 auf. Diese sind im Wesentlichen parallel zu der Rotationsachse der Bremsscheibe angeordnet, wobei sich jede der beiden Führungsstäbe 142, 144 jeweils durch eine erste Öffnung 146, 148 im oberen Bereich eines der Bremsbelagträger 112 und durch ein zweite Öffnung 150, 152 im oberen Bereich des anderen Bremsbelagträgers 114 hindurch erstreckt, wobei jede der erste Öffnungen 146, 148 einer zugehörigen der zweiten Öffnungen 150, 152 gegenüberliegend angeordnet ist.

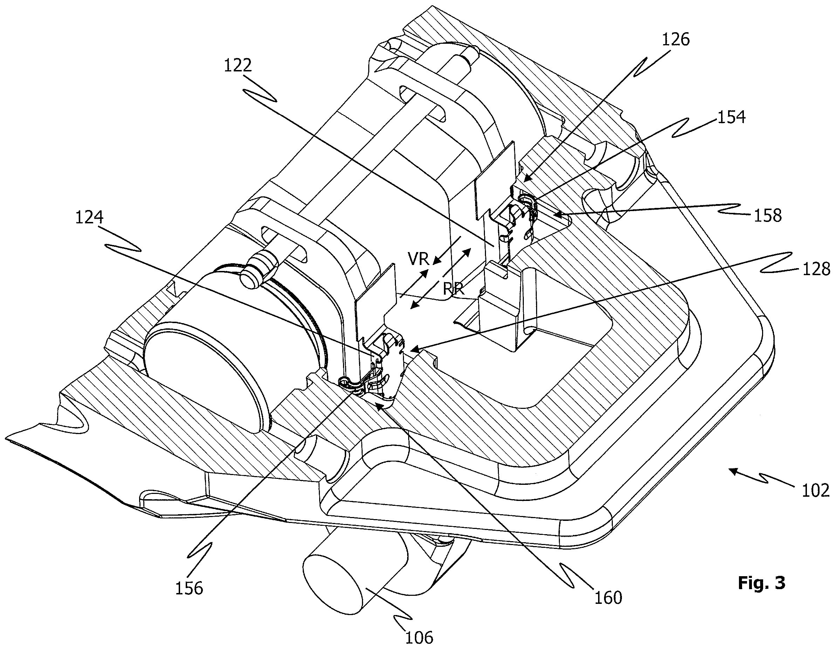

Figur 3 zeigt einen vergrößerten Ausschnitt der in Figur 2 dargestellten perspektivischen Ansicht der Festsattelscheibenbremse 100. In diesem vergrößerten Ausschnitt ist zu erkennen, dass jedes der Führungsmittel 126, 128 jeweils ein elastisch deformierbares Rückstellelement 154, 156 aufweist. Jedes der elastisch deformierbaren Rückstellelement 154, 156 umgreift den zugehörigen Bremsbelagträger 112, 114 im Bereich der zugehörigen Führungsfläche 122, 124. Bei einer bremswirksamen Verlagerung der Bremsbelaganordnungen 108, 110 werden die Rückstellelement 154, 156 synchron zu der Verlagerung der Bremsbelaganordnungen 108, 110 ausgelenkt und dadurch elastisch deformiert. Hierdurch üben die Rückstellelement 154, 156 jeweils eine Rückstellkraft auf die zugehörige Bremsbelaganordnung 108, 110 aus, die der bremswirksamen Verlagerung dieser Bremsbelaganordnung entgegenwirkt.

Sobald die mittels der Betätigungskolben 134, 136, 138, 140 auf die Bremsbelaganordnungen 108, 110 aufgebrachte Bremskraft gelöst wird, sorgt die Rückstellkraft für eine Verlagerung der Bremsbelaganordnungen 108, 110 in eine der bremswirksamen Verlagerungsrichtung VR entgegengesetzte Rückstellrichtung RR. Durch das Verlagern der Bremsbelaganordnungen 108, 110 kann ein Lüftspiel, von beispielsweise 0,2 mm, zwischen jedem der Bremsbeläge 116, 118 und der Bremsscheibe erreicht werden. Dieses verhindert das Auftreten von Restschleifenmomenten und reduziert somit die Geräuschbildung im Bereich der Festsattelscheibenbremsen sowie den Kraftstoffverbrauch des Kraftfahrzeugs.

Wie ferner in Figur 3 zu erkennen ist, sind die Rückstellelemente 154, 156 zumindest teilweise in einer Ausnehmung 158, 160 des fahrzeugfesten Bremssattels 102 angeordnet. Diese Ausnehmungen 158, 160 bilden jeweils eine Hinterschneidung in dem beispielsweise gusseisernen oder auch aus einem Leichtmetall bestehenden Bremssattel 102, die im Bereich eines zugehörigen Aufnahmebereichs 130, 132 angeordnet sind. Durch die Ausnehmungen 158, 160 bietet der fahrzeugfeste Bremssattel 102 ausreichend Platz, um ein Führungsmittel 126, 128 mit einem Rückstellelement 154, 156 überhaupt erst und auf vergleichsweise einfache Weise an diesem anzubringen.

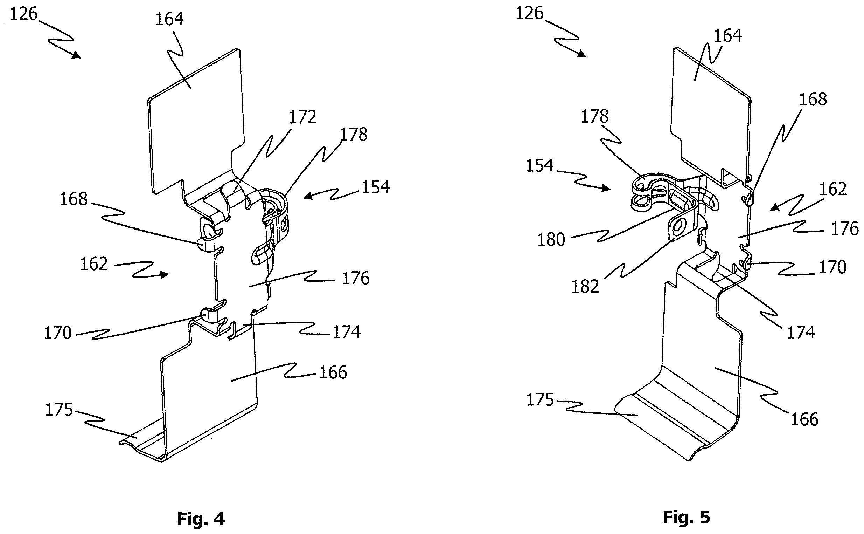

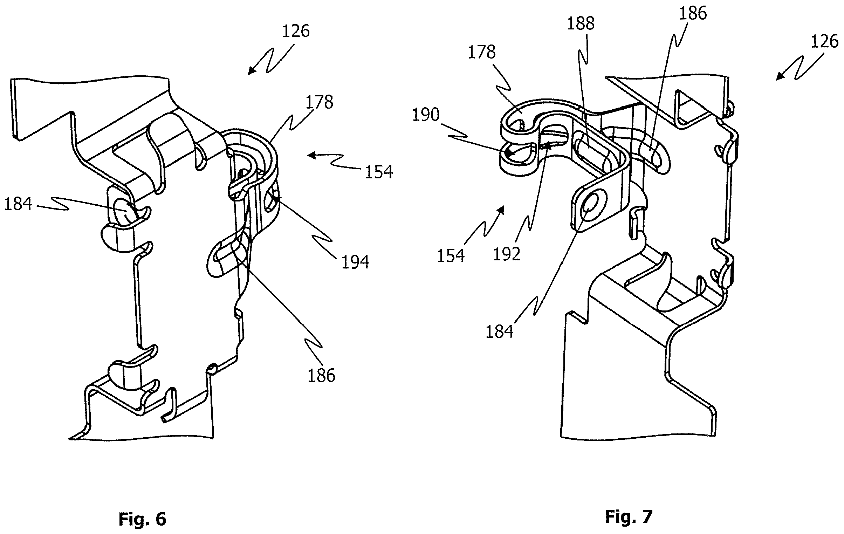

Die Figuren 4 bis 7 zeigen verschiedene perspektivische Ansichten eines der mit der Festsattelscheibenbremse 100 verwendbaren Führungsmittel 126, das ein elastisch deformierbares Rückstellelement 154 umfasst. Insbesondere kann dieses Führungsmittel 126 für eine Verwendung mit der Festplattenscheibenbremse 100 bestimmt, dimensioniert und ausgebildet sein.

Das Führungsmittel 126 hat einen Grundkörper mit einem Führungsabschnitt 162, an den sich eine obere Anlagefläche 164 sowie eine untere Anlagefläche 166 anschließen. Die obere und die untere Anlagefläche 164, 166 sind zumindest abschnittsweise jeweils mit der Führungsfläche des Bremssattels (hier nicht gezeigt) in Anlage bringbar oder mit geringem Spiel von dieser leicht beabstandet. Der Führungsabschnitt 162 ist in einem Aufnahmebereich (hier nicht gezeigt) des Bremssattels anbringbar.

Das Führungsmittel 126 weist eine Mehrzahl von Krallhaken 168, 170, 172, 174 auf, die im Bereich des Führungsabschnitts 162 ausgebildet sind und nach außen, d.h. in Richtung des Aufnahmebereichs des Bremssattels, von dem Grundkörper des Führungsmittels 126 vorspringen. Diese Krallhaken 168, 170, 172, 174 stützen sich in dem montierten Zustand des Führungsmittels 126 gegenüber dem Aufnahmebereich des Bremssattels ab und befestigen das Führungsmittel 126 tangential und lateral in dem Aufnahmebereich des Bremssattels. Somit ermöglichen die Krallhaken 168, 170, 172, 174 einen festen, reibschlüssigen Sitz des Führungsmittels 126 an dem Bremssattel, wobei eine Relativbewegung zwischen dem Führungsmittel 126 und dem Bremssattel selbst bei einer bremswirksamen Verlagerung der zugehörigen Bremsbelaganordnung vermieden wird.

An der unteren Anlagefläche 166 ist ferner ein Lippenabschnitt 175 vorgesehen, der einen kurvenförmigen Querschnitt aufweist und durch seine Anordnung elastisch vorgespannt ist. In einem am Bremssattel angebrachten Zustand wirkt die zugehörige Bremsbelaganordnung zumindest abschnittsweise von oben auf den Lippenabschnitt 175, was sich positiv auf die Fixierung des Führungsmittels 126 am Bremssattel auswirkt. Zudem kann zur Demontage des Führungsmittels 126 vom Bremssattel der Lippenabschnitt 175 angehoben bzw. eine Kraft auf dessen Unterseite ausgeübt werden, wodurch das Führungsmittel 126 vergleichsweise einfach vom Bremssattel lösbar ist.

In den Figuren 4 bis 7 ist gezeigt, dass das elastisch deformierbare Rückstellelement 154 einstückig in Form eines elastisch deformierbaren Federbügels an dem Führungsmittel 126 ausgebildet ist. Genauer gesagt ist das Rückstellelement 154 an einer Seitenkante einer rückseitigen Fläche 176 des Führungsabschnitts 162 des Führungsmittels 126 ausgebildet.

Das elastisch deformierbare Rückstellelement 154 umfasst einen bogenförmig ausgebildeten Verbindungsabschnitt 178, der die rückseitige Fläche 176 bzw. eine Seitenkante dieser rückseitigen Fläche 176 mit einem im Wesentlichen horizontalen Bügelabschnitt 180 verbindet. Am Ende dieses Bügelabschnitts 180 weist das Rückstellelement 154 einen gegenüber dem Bügelabschnitt 180 abgewinkelten Bügelarm 182 auf, der sich in einer von der rückseitigen Fläche 176 abweisenden Richtung erstreckt und dazu ausgebildet ist, in einem montierten Zustand des Führungsmittels 126 die zugehörige Bremsbelaganordnung bzw. den zugehörigen Bremsbelagträger zu hintergreifen. Der Bügelabschnitt 180 liegt im Wesentlichen in derselben Ebene, wie die Anlageflächen 164, 166 des Führungsmittels 126.

Der Bügelarm 182 weist eine Kontaktprägung 184 auf, die in dem gezeigten Ausführungsbeispiel eine punktförmige Abstützung des Bügelarms 182 gegenüber der zugehörigen Bremsbelaganordnung bzw. dem zugehörigen Bremsbelagträger ermöglicht.

Des Weiteren weist das elastisch deformierbare Rückstellelement 154 eine erste Sicke 186 und eine zweite Sicke 188 auf, die den Verformungswiderstand des Rückstellelements 154 gegen eine plastische Verformung erhöhen. Die erste Sicke 186 ist dabei in einem Übergangsbereich zwischen dem elastisch deformierbaren Rückstellelement 154 und der rückseitigen Fläche 176 des Führungsmittels 126 angeordnet. Genauer gesagt erstreckt sich die erste Sicke 186 sowohl in einen an das Rückstellelement 154 angrenzenden Bereich der rückseitigen Fläche 176 als auch in einen an die rückseitige Fläche 176 angrenzenden Bereich des Verbindungsabschnitts 178 des Rückstellelements 154. Die zweite Sicke 188 ist im Bereich des horizontalen Bügelabschnitts 180 ausgebildet. Somit erhöhen die beiden Sicken 186, 188 den Verformungswiderstand des Rückstellelements 154 gegen eine plastische Verformung in den vorstehend beschriebenen Bereichen.

Darüber hinaus weist das elastisch deformierbare Rückstellelement 154 eine erste Aussparung 190, eine zweite Aussparung 192 und eine dritte Aussparung 194 auf, die den Verformungswiderstand des Rückstellelements 154 gegen eine plastische Verformung verringern. Die erste Aussparung 190, die zweite Aussparung 192 und die dritte Aussparung 194 sind allesamt in dem bogenförmigen Verbindungsabschnitt 178 des elastisch deformierbaren Rückstellelements 154 angeordnet. Somit verringern die drei Aussparungen 190, 192, 194 den Verformungswiderstand des Rückstellelements 154 gegen eine plastische Verformung im Bereich des bogenförmigen Verbindungsabschnitts 178.

Durch die gezielte Erhöhung und Verringerung des Verformungswiderstands des Rückstellelements 154 mittels der Sicken 186, 188 und der Aussparungen 190, 192, 194 wird eine definierte plastische Deformierbarkeit des Rückstellelements 154 gezielt eingestellt. Insbesondere sind die Dimensionen, Geometrien und Anordnungen der Sicken 186, 188 und der Aussparungen 190, 192, 194 derart gewählt, dass bei einer vorbestimmten Auslenkung des Rückstellelements 154 durch eine bremswirksame Verlagerung einer zugehörigen Bremsbelaganordnung eine definierte plastische Deformation des Rückstellelements 154 auftritt, ohne dadurch die elastische Deformierbarkeit des Rückstellelements 154 zu beeinflussen. Somit kann vorgesehen sein, dass sich das Rückstellelement 154 beim Erreichen einer vorbestimmten Verschleißgrenze eines zugehörigen Bremsbelags und einer damit verbundenen Auslenkung der Bremsbelaganordnung - und des Rückstellelements 154 - beim Bremsen in einer bestimmten Weise plastisch deformiert, um diesen Verschleiß des zugehörigen Bremsbelags zu kompensieren und weiter die Funktion des Führungsmittels 126 bzw. des Rückstellelements 154 sicherzustellen. Es versteht sich, dass bei geeigneter Wahl und Ausbildung einer beliebigen Anzahl von Sicken und/oder Aussparungen auch mehrere solcher Verschleißgrenzen definiert werden können, sodass im Laufe der Betriebsdauer einer Bremsbelaganordnung und zugehöriger Führungsmittel mehrere definierte plastische Deformationen auftreten können.

## Patentansprüche

1. Festsattelscheibenbremse (100) für ein Kraftfahrzeug, umfassend
einen fahrzeugfesten Bremssattel (102) mit wenigstens einer Führung, die einen Aufnahmebereich (130, 132) aufweist,
wenigstens eine Bremsbelaganordnung (108, 110) mit einem Bremsbelagträger (112, 114), an dem ein Bremsbelag (116, 118) angebracht ist, wobei der Bremsbelagträger (112, 114) wenigstens eine Führungsfläche (122, 124) umfasst,
wenigstens ein Führungsmittel (126, 128) mit einem Führungsabschnitt (162), der in dem Aufnahmebereich (130, 132) der wenigstens einen Führung angebracht ist,
wobei die wenigstens eine Bremsbelaganordnung (108, 110) über den wenigstens eine Führungsfläche (122, 124) des Bremsbelagträgers (112, 114), die an dem wenigstens einen Führungsmittel (126, 128) verlagerbar anliegt, im Bereich der Führung des Bremssattels (102) verlagerbar geführt ist, und wobei der Bremsbelag (116, 118) durch eine bremswirksame Verlagerung der wenigstens einen Bremsbelaganordnung (108, 110) mit einer Bremsscheibe zum Erzielen einer Bremswirkung in Wechselwirkung bringbar ist,
wobei das Führungsmittel (126, 128) ein elastisch deformierbares Rückstellelement (154, 156) umfasst, das sich gegenüber dem Bremsbelagträger (112, 114) abstützt und dazu ausgebildet ist, durch die bremswirksame Verlagerung der wenigstens einen Bremsbelaganordnung (108, 110) eine Rückstellkraft infolge einer elastischen Deformation auf diese auszuüben, die der bremswirksamen Verlagerung der wenigstens einen Bremsbelaganordnung (108, 110) entgegenwirkt, **dadurch gekennzeichnet, dass** das Rückstellelement (154, 156) zumindest teilweise in einer Ausnehmung (158, 160) des fahrzeugfesten Bremssattels (102) angeordnet ist, wobei die Ausnehmung (158, 160) des fahrzeugfesten Bremssattels (102) im Bereich des Aufnahmebereichs (130, 132) der wenigstens einen Führung oder daran angrenzend ausgebildet ist, wobei das Rückstellelement (154, 156) einstückig mit dem Führungsmittel (126, 128) ausgebildet ist.

2. Festsattelscheibenbremse (100) nach Anspruch 1, **dadurch gekennzeichnet, dass** das Rückstellelement (154, 156) einen elastisch deformierbaren Federbügel mit einem bogenförmig ausgebildeten Verbindungsabschnitt (178) aufweist, der vorzugsweise seitlich an dem Führungsabschnitt (162) des Führungsmittels (126, 128) angebracht ist.

3. Festsattelscheibenbremse (100) nach Anspruch 2, **dadurch gekennzeichnet, dass** der Federbügel die wenigstens eine Führungsfläche (122, 124) des Bremsbelagträgers (112, 114) mittels eines gegenüber dem Federbügel abgewinkelten Bügelarms (182) umgreift, wobei der Bügelarm (182) vorzugsweise eine Kontaktprägung (184) aufweist, um eine punktförmige oder linienförmige Abstützung des Rückstellelements (154, 156) gegenüber dem Bremsbelagträger (112, 114) auszubilden.

4. Festsattelscheibenbremse (100) nach einem der vorangehenden Ansprüche, **dadurch gekennzeichnet, dass** das Führungsmittel (126, 128) wenigstens eine Aussparung (190, 192) zur Verringerung des Verformungswiderstands des Rückstellelements (154, 156) aufweist, wobei die wenigstens eine Aussparung (190, 192, 194) vorzugsweise an dem Rückstellelement (154, 156) und/oder an dem Führungsabschnitt (162) des Führungsmittels (126, 128) angeordnet ist.

5. Festsattelscheibenbremse (100) nach einem der vorangehenden Ansprüche, **dadurch gekennzeichnet, dass** das Führungsmittel (126, 128) wenigstens eine Sicke (186,188) zur Erhöhung des Verformungswiderstands des Rückstellelements (154, 156) aufweist, wobei die wenigstens eine Sicke (186,188) vorzugsweise an dem Rückstellelement (154, 156) und/oder an dem Führungsabschnitt (162) des Führungsmittels (126, 128) angeordnet ist.

6. Festsattelscheibenbremse (100) nach einem der vorangehenden Ansprüche, **dadurch gekennzeichnet, dass** das Führungsmittel mehrere elastisch deformierbare Rückstellelemente umfasst.

7. Festsattelscheibenbremse (100) nach einem der vorangehenden Ansprüche, **dadurch gekennzeichnet, dass** die Ausnehmung (158, 160) des fahrzeugfesten Bremssattels (102) eine Hinterschneidung bildet.

8. Bremssattel (102) für eine Festsattelscheibenbremse (100) nach einem der vorangehenden Ansprüche, der fest mit einer Fahrzeugachse verbindbar oder verbunden ist,
wobei der Bremssattel (102) wenigstens eine Führung mit einem Aufnahmebereich (130, 132) umfasst, der derart dimensioniert und dazu ausgebildet ist, einen Führungsabschnitt (162) eines Führungsmittels (126, 128) aufzunehmen,
wobei eine Führungsfläche (122, 124) eines Bremsbelagträgers (112, 114) einer Bremsbelaganordnung (108, 110) mit dem Führungsmittel (126, 128) in Anlage bringbar ist, sodass die Bremsbelaganordnung (108, 110) über die Führungsfläche (122, 124) des Bremsbelagträgers (112, 114) im Bereich der Führung des Bremssattels (102) verlagerbar geführt ist, um einen Bremsbelag (116, 118) der Bremsbelaganordnung (108, 110) durch eine bremswirksame Verlagerung der Bremsbelaganordnung (108, 110) mit einer Bremsscheibe zum Erzielen einer Bremswirkung in Wechselwirkung zu bringen,
**dadurch gekennzeichnet, dass**
der Bremssattel (102) wenigstens eine Ausnehmung (158, 160) aufweist, die derart dimensioniert und ausgebildet ist, dass ein elastisch deformierbares Rückstellelement (154, 156) des Führungsmittels (126, 128) zumindest teilweise in der wenigstens einen Ausnehmung (158, 160) anordenbar ist, wobei das elastisch deformierbare Rückstellelement (154, 156) gegenüber dem Bremsbelagträger (112, 114) abstützbar und dazu ausgebildet ist, durch die bremswirksame Verlagerung der Bremsbelaganordnung (108, 110) eine Rückstellkraft infolge einer elastischen Deformation auf diese auszuüben, die der bremswirksamen Verlagerung der Bremsbelaganordnung (108, 110) entgegenwirkt, wobei die Ausnehmung (158, 160) des fahrzeugfesten Bremssattels (102) im Bereich des Aufnahmebereichs (130, 132) der wenigstens einen Führung oder daran angrenzend ausgebildet ist.

9. Bremssattel (102) nach Anspruch 8, **dadurch gekennzeichnet, dass** die Ausnehmung (158, 160) des fahrzeugfesten Bremssattels (102) eine Hinterschneidung bildet.

## Claims

1. Fixed-calliper disk brake (100) for a motor vehicle, comprising
a brake calliper (102) fixed with respect to the vehicle, with at least one guide which has a receiving region (130, 132),
at least one brake pad arrangement (108, 110) with a brake pad carrier (112, 114) to which a brake pad (116, 118) is attached, wherein the brake pad carrier (112, 114) comprises at least one guide surface (122, 124),
at least one guide means (126, 128) with a guide section (162) which is fitted in the receiving region (130, 132) of the at least one guide,
wherein the at least one brake pad arrangement (108, 110) is guided displaceably in the region of the guide of the brake calliper (102) by means of the at least one guide surface (122, 124) of the brake pad carrier (112, 114), which at least one guide surface bears displaceably against the at least one guide means (126, 128), and wherein the brake pad (116, 118) can, by means of a braking-action-inducing displacement of the at least one brake pad arrangement (108, 110), be placed in interaction with a brake disk in order to realize a braking action,
wherein
the guide means (126, 128) comprises an elastically deformable restoring element (154, 156) which is supported relative to the brake pad carrier (112, 114) and which is designed to, as a result of the braking-action-inducing displacement of the at least one brake pad arrangement (108, 110), exert a restoring force on said brake pad arrangement owing to an elastic deformation, which restoring force counteracts the braking-action-inducing displacement of the at least one brake pad arrangement (108, 110), **characterized in that** the restoring element (154, 156) is arranged at least partially in a recess (158, 160) of the brake calliper (102) fixed with respect to the vehicle, wherein the recess (158, 160) of the brake calliper (102) fixed with respect to the vehicle is formed in the region of the receiving region (130, 132) of the at least one guide or adjacent thereto, wherein the restoring element (154, 156) is formed in one piece with the guide means (126, 128) .

2. Fixed-calliper disk brake (100) according to Claim 1, **characterized in that** the restoring element (154, 156) has an elastically deformable spring clip with an arcuate connecting section (178) which is attached preferably laterally to the guide section (162) of the guide means (126, 128).

3. Fixed-calliper disk brake (100) according to Claim 2, **characterized in that** the spring clip engages around the at least one guide surface (122, 124) of the brake pad carrier (112, 114) by means of a clip arm (182) which is angled relative to the spring clip, wherein the clip arm (182) preferably has a contact embossment (184) in order to form a punctiform or linear support of the restoring element (154, 156) relative to the brake pad carrier (112, 114).

4. Fixed-calliper disk brake (100) according to any one of the preceding claims, **characterized in that** the guide means (126, 128) has at least one cutout (190, 192) for reducing the deformation resistance of the restoring element (154, 156), wherein the at least one cutout (190, 192, 194) is arranged preferably on the restoring element (154, 156) and/or on the guide section (162) of the guide means (126, 128).

5. Fixed-calliper disk brake (100) according to any one of the preceding claims, **characterized in that** the guide means (126, 128) has at least one bead (186, 188) for increasing the deformation resistance of the restoring element (154, 156), wherein the at least one bead (186, 188) is arranged preferably on the restoring element (154, 156) and/or on the guide section (162) of the guide means (126, 128).

6. Fixed-calliper disk brake (100) according to any one of the preceding claims, **characterized in that** the guide means comprises multiple elastically deformable restoring elements.

7. Fixed-calliper disk brake (100) according to any one of the preceding claims, **characterized in that** the recess (158, 160) of the brake calliper (102) fixed with respect to the vehicle forms an undercut.

8. Brake calliper (102) for a fixed-calliper disk brake 100) according to any one of the preceding claims, which brake calliper is fixedly connectable or connected to a vehicle axle,
wherein the brake calliper (102) comprises at least one guide with a receiving region (130, 132) which is dimensioned and designed to receive a guide section (162) of a guide means (126, 128),
wherein a guide surface (122, 124) of a brake pad carrier (112, 114) of a brake pad arrangement (108, 110) can be placed in contact with the guide means (126, 128) such that the brake pad arrangement (108, 110) is guided displaceably in the region of the guide of the brake calliper (102) by means of the guide surface (122, 124) of the brake pad carrier (112, 114) in order, by means of a braking-action-inducing displacement of the at least one brake pad arrangement (108, 110), to place a brake pad (116, 118) of the brake pad arrangement (108, 110) in interaction with a brake disk in order to realize a braking action,
**characterized in that**
the brake calliper (102) has at least one recess (158, 160) which is dimensioned and configured such that an elastically deformable restoring element (154, 156) of the guide means (126, 128) is at least partially arrangeable in the at least one recess (158, 160), wherein the elastically deformable restoring element (154, 156) is supportable relative to the brake pad carrier (112, 114) and is designed to, as a result of the braking-action-inducing displacement of the at least one brake pad arrangement (108, 110), exert a restoring force on said brake pad arrangement owing to an elastic deformation, which restoring force counteracts the braking-action-inducing displacement of the at least one brake pad arrangement (108, 110), wherein the recess (158, 160) of the brake calliper (102) fixed with respect to the vehicle is formed in the region of the receiving region (130, 132) of the at least one guide or adjacent thereto.

9. Brake calliper (102) according to Claim 8, **characterized in that** the recess (158, 160) of the brake calliper (102) fixed with respect to the vehicle forms an undercut.

## Revendications

1. Frein à disque à étrier fixe (100) pour un véhicule automobile, comportant
un étrier de frein (102) solidaire du véhicule et doté d'au moins un guide qui comprend une zone de réception (130, 132),
au moins un ensemble garniture de frein (108, 110) doté d'un support de garniture de frein (112, 114) sur lequel une garniture de frein (116, 118) est montée, le support de garniture de frein (112, 114) comportant au moins une surface de guidage (122, 124),
au moins un moyen de guidage (126, 128) doté d'une partie de guidage (162) qui est montée dans la zone de réception (130, 132) de l'au moins un guide,
l'au moins un ensemble garniture de frein (108, 110) étant guidé de manière déplaçable dans la région du guide de l'étrier de frein (102) par le biais de l'au moins une surface de guidage (122, 124) du support de garniture de frein (112, 114), laquelle s'appuie de manière déplaçable contre l'au moins un moyen de guidage (126, 128), et la garniture de frein (116, 118), par un déplacement, ayant une action de freinage, de l'au moins un ensemble garniture de frein (108, 110), pouvant être amenée en interaction avec un disque de frein pour l'obtention d'une action de freinage,
le moyen de guidage (126, 128) comportant un élément de rappel (154, 156) déformable élastiquement, qui s'appuie contre le support de garniture de frein (112, 114) et est réalisé pour, par le déplacement, ayant une action de freinage, de l'au moins un ensemble garniture de frein (108, 110), exercer une force de rappel sur celui-ci suite à une déformation élastique, laquelle force de rappel s'oppose au déplacement, ayant une action de freinage, de l'au moins un ensemble garniture de frein (108, 110), **caractérisé en ce que** l'élément de rappel (154, 156) est disposé au moins partiellement dans un creux (158, 160) de l'étrier de frein (102) solidaire du véhicule, le creux (158, 160) de l'étrier de frein (102) solidaire du véhicule étant réalisé dans la région de la zone de réception (130, 132) de l'au moins un guide ou étant réalisé de manière adjacente à celle-ci, l'élément de rappel (154, 156) étant réalisé d'une seule pièce avec le moyen de guidage (126, 128).

2. Frein à disque à étrier fixe (100) selon la revendication 1, **caractérisé en ce que** l'élément de rappel (154, 156) comprend un étrier de ressort déformable élastiquement doté d'une partie de liaison (178) réalisée en forme d'arc, qui est montée de préférence latéralement sur la partie de guidage (162) du moyen de guidage (126, 128).

3. Frein à disque à étrier fixe (100) selon la revendication 2, **caractérisé en ce que** l'étrier de ressort vient en prise autour de l'au moins une surface de guidage (122, 124) du support de garniture de frein (112, 114) au moyen d'un bras d'étrier (182) coudé par rapport à l'étrier de ressort, le bras d'étrier (182) comprenant de préférence une empreinte de contact (184), afin de réaliser un appui ponctuel ou linéaire de l'élément de rappel (154, 156) par rapport au support de garniture de frein (112, 114).

4. Frein à disque à étrier fixe (100) selon l'une des revendications précédentes, **caractérisé en ce que** le moyen de guidage (126, 128) comprend au moins un évidement (190, 192) servant à la réduction de la résistance à la déformation de l'élément de rappel (154, 156), l'au moins un évidement (190, 192, 194) étant disposé de préférence sur l'élément de rappel (154, 156) et/ou sur la partie de guidage (162) du moyen de guidage (126, 128).

5. Frein à disque à étrier fixe (100) selon l'une des revendications précédentes, **caractérisé en ce que** le moyen de guidage (126, 128) comprend au moins une moulure (186, 188) servant à l'augmentation de la résistance à la déformation de l'élément de rappel (154, 156), l'au moins une moulure (186, 188) étant disposée de préférence sur l'élément de rappel (154, 156) et/ou sur la partie de guidage (162) du moyen de guidage (126, 128).

6. Frein à disque à étrier fixe (100) selon l'une des revendications précédentes, **caractérisé en ce que** le moyen de guidage comporte plusieurs éléments de rappel déformables élastiquement.

7. Frein à disque à étrier fixe (100) selon l'une des revendications précédentes, **caractérisé en ce que** le creux (158, 160) de l'étrier de frein (102) solidaire du véhicule forme une contre-dépouille.

8. Étrier de frein (102) pour un frein à disque à étrier fixe (100) selon l'une des revendications précédentes, lequel étrier peut être relié ou est relié solidement à un essieu de véhicule,
l'étrier de frein (102) comportant au moins un guide doté d'une zone de réception (130, 132) qui est dimensionnée et réalisée pour recevoir une partie de guidage (162) d'un moyen de guidage (126, 128),
une surface de guidage (122, 124) d'un support de garniture de frein (112, 114) d'un ensemble garniture de frein (108, 110) pouvant être amenée en appui contre le moyen de guidage (126, 128), de sorte que l'ensemble garniture de frein (108, 110) soit guidé de manière déplaçable dans la région du guide de l'étrier de frein (102) par le biais de la surface de guidage (122, 124) du support de garniture de frein (112, 114), afin d'amener une garniture de frein (116, 118) de l'ensemble garniture de frein (108, 110) en interaction avec un disque de frein par un déplacement, ayant une action de freinage, de l'ensemble garniture de frein (108, 110) pour l'obtention d'une action de freinage,
**caractérisé en ce que**
l'étrier de frein (102) comprend au moins un creux (158, 160) qui est dimensionné et réalisé de telle sorte qu'un élément de rappel (154, 156) déformable élastiquement du moyen de guidage (126, 128) puisse être disposé au moins partiellement dans l'au moins un creux (158, 160), l'élément de rappel (154, 156) déformable élastiquement pouvant être supporté contre le support de garniture de frein (112, 114) et étant réalisé pour, par le déplacement, ayant une action de freinage, de l'ensemble garniture de frein (108, 110), exercer une force de rappel sur celui-ci suite à une déformation élastique, laquelle force de rappel s'oppose au déplacement, ayant une action de freinage, de l'ensemble garniture de frein (108, 110), le creux (158, 160) de l'étrier de frein (102) solidaire du véhicule étant réalisé dans la région de la zone de réception (130, 132) de l'au moins un guide ou de manière adjacente à celle-ci.

9. Étrier de frein (102) selon la revendication 8, **caractérisé en ce que** le creux (158, 160) de l'étrier de frein (102) solidaire du véhicule forme une contre-dépouille.
